# EUROPÄISCHE PATENTSCHRIFT

(11) **EP 4 010 887 B1**
(45) Veröffentlichungstag und Bekanntmachung des Hinweises auf die Patenterteilung: **17.01.2024**
(21) Anmeldenummer: 20750647.8
(22) Anmeldetag: 31.07.2020
(51) Int. Cl.: G08B 17/113, G08B 17/107

(54) **GEHÄUSE FÜR EINE DETEKTIONSEINHEIT ZUM OPTISCHEN DETEKTIEREN VON RAUCHPARTIKELN**
HOUSING FOR A DETECTION UNIT FOR OPTICALLY DETECTING SMOKE PARTICLES
BOÎTIER POUR UNE UNITÉ DE DÉTECTION POUR LA DÉTECTION OPTIQUE DE PARTICULES DE FUMÉE

(30) Priorität: 05.08.2019 DE 102019121063
(43) Veröffentlichungstag der Anmeldung: 15.06.2022
(73) Patentinhaber: Minimax Viking Research & Development GmbH, 23840 Bad Oldesloe (DE)
(72) Erfinder: EICHMANN, Jens, 23840 Bad Oldesloe (DE); DECHAU, Carl, 23840 Bad Oldesloe (DE); MITZLAFF, Thorsten, 23840 Bad Oldesloe (DE); ZIEGENBEIN, Timo, 23840 Bad Oldesloe (DE); DITTMER, Hauke, 23840 Bad Oldesloe (DE); SIEMER, Dirk, 23840 Bad Oldesloe (DE)
(74) Vertreter: Eisenführ Speiser
(86) Internationale Anmeldenummer: PCT/EP2020/071696
(87) Internationale Veröffentlichungsnummer: WO 2021/023666

(56) Entgegenhaltungen:
- DE-U1-202015 000 820
- US-A- 5 400 014
- US-A1- 2002 089 426
- US-A1- 2008 218 364

## Beschreibung

Die Erfindung bezieht sich auf ein Gehäuse für eine Detektionseinheit zum optischen Detektieren von Rauchpartikeln. Die Erfindung bezieht sich des Weiteren auf einen Rauchdetektor mit einer Detektionseinheit und dem Gehäuse. Zudem bezieht sich die Erfindung auf ein Rauchmeldesystem mit dem Rauchdetektor und einer Auswerteeinheit zum Bestimmen, ob Rauchpartikel vorhanden sind, durch Auswerten von Strahlung, die von dem Rauchdetektor detektiert worden ist.

US 5,400,014 offenbart einen Rauchdetektor mit einer Dunkelkammer, die obere und untere Wände und eine umlaufende Wandstruktur aufweist, die sich zwischen den oberen und unteren Wänden erstreckt. Die umlaufende Wandstruktur blockiert Licht, das von der Kammer ausgeht, erlaubt aber eine Zirkulation von schwebenden Partikeln innerhalb der Kammer. Die umlaufende Wandstruktur umfasst eine Vielzahl von verschachtelten schaufelartigen Elementen, die jeweils erste und zweite Erweiterungen umfassen, die einen spitzen Winkel schneiden. Zwischen benachbarten schaufelartigen Elementen ist ein gewundener Pfad definiert, der so strukturiert ist, dass von außen in die Kammer einfallendes Licht zumindest drei Reflexionen benötigt, um in das Innere der Kammer zu gelangen.

Die Gebrauchsmusterschrift DE 20 2015 000 820 U1 offenbart einen Streulichtrauchmelder mit einer nach dem Streulichtprinzip arbeitenden Detektionseinheit, mit einer ersten und zweiten Leuchtdiode zum Bestrahlen von zu delektierenden Partikeln sowie mit einem dafür spektral empfindlichen gemeinsamen Photosensor. Die beiden Leuchtdioden umfassen jeweils eine Sendeachse und der Photosensor umfasst eine Empfangsachse, wobei beide Leuchtdioden sowie der Photosensor derart zueinander angeordnet und ausgerichtet sind, dass alle drei Achsen in einer gemeinsamen Ebene liegen und wobei die erste Leuchtdiode mit dem Photosensor unter einem Vorwärtsstreuwinkel und die zweite Leuchtdiode mit dem Photosensor unter einem Rückwärtsstreuwinkel angeordnet ist. Die beiden Leuchtdioden weisen jeweils einen ersten und zweiten LED-Chip zum Aussenden eines jeweiligen ersten und zweiten Lichtbündels mit Licht in einem ersten und in einem davon verschiedenen zweiten Wellenlängenbereich auf.

Die Patentschrift DE 33 45 688 C2 offenbart einen Streulicht-Rauchmelder mit einer Lichtquelle und einem von dieser nicht direkt beaufschlagbaren Lichtfühler, die in einer Messkammer angeordnet sind. Die Messkammer ist von einer zylindrischen Seitenwand umschlossen, die Raucheintrittsöffnungen aufweist, wobei hinter den Raucheintrittsöffnungen lamellenförmige Blenden angeordnet sind, die sich unter einem spitzen Winkel zur Seitenwand schräg nach innen erstrecken und zwischen sich geknickte, das Außenlicht abschirmende Durchlässe für den eintretenden Rauch bilden. Die Innenflächenabschnitte der Blenden, die von dem Strahlen der Lichtquelle direkt beaufschlagt werden, sind ausgehend von radial äußeren Enden der Blenden zu einer Messkammerachse hin stetig gekrümmt.

Der Streulicht-Rauchmelder hat den Nachteil, dass der Ruhewert, das heißt die Intensität des detektierten Lichts ohne Vorhandensein von Rauch in der Messkammer, relativ hoch ist, wodurch die Detektionsempfindlichkeit reduziert ist.

Es ist daher eine Aufgabe der vorliegenden Erfindung, ein Gehäuse für eine Detektionseinheit zum optischen Detektieren von Rauchpartikeln bereitzustellen, das eine erhöhte Detektionsempfindlichkeit ermöglicht. Es ist auch eine Aufgabe der vorliegenden Erfindung, einen Rauchdetektor mit einer Detektionseinheit und dem Gehäuse, ein Rauchmeldesystem mit dem Rauchdetektor und eine Brandschutzanlage mit dem Rauchmeldesystem bereitzustellen.

Die Aufgabe wird durch ein Gehäuse für eine Detektionseinheit zum optischen Detektieren von Rauchpartikeln, wie in Anspruch 1 beansprucht, gelöst, wobei die Detektionseinheit eine Lichtquelle zum Aussenden einer an zu detektierenden Rauchpartikeln zu streuenden Strahlung und einen Lichtdetektor zum Detektieren der gestreuten Strahlung umfasst, wobei das Gehäuse eine zylinderförmige Außenfläche mit Rauchöffnungen, durch die die Rauchpartikel in das Gehäuse gelangen, und eine radialsymmetrische Lichtführungsstruktur mit Führungselementen umfasst, wobei die Führungselemente so ausgebildet sind, dass benachbarte Führungselemente jeweils einen Führungskanal bilden, durch den von der Lichtquelle ausgesandte und nicht an den Rauchpartikeln gestreute Strahlung in Richtung der Rauchöffnungen durch Mehrfachreflexion herausführbar ist.

Da das Gehäuse eine radialsymmetrische Lichtführungsstruktur mit Führungselementen umfasst, die so ausgebildet sind, dass benachbarte Führungselemente jeweils einen Führungskanal bilden, durch den von der Lichtquelle ausgesandte und nicht an den Rauchpartikeln gestreute Strahlung in Richtung der Rauchöffnungen durch Mehrfachreflexion aus dem Gehäuse herausführbar ist, kann der Ruhewert, das heißt die Intensität der vom Lichtdetektor gemessenen Strahlung, wenn sich keine Rauchpartikel in dem Gehäuse befinden, signifikant reduziert werden. Dies wiederum führt zu einer verbesserten Detektionsempfindlichkeit.

Der Ausdruck *"radialsymmetrische Lichtführungsstruktur"* bezieht sich darauf, dass die Führungselemente alle gleich ausgebildet sind und durch eine Drehung um die Zylinderachse der zylinderförmigen Außenfläche aufeinander abgebildet werden können.

Es ist bevorzugt, dass die Führungselemente Spitzen aufweisen, die in Richtung eines mittigen Bereichs des Gehäuses weisen. Die Spitzen sind bevorzugt spitze Kanten, die dort gebildet werden, wo sich zwei Seitenflächen des jeweiligen Führungselements unter einem spitzen Winkel berühren.

Jedes Führungselement umfasst eine konkave Seitenfläche und eine gegenüberliegende konvexe Seitenfläche. Hierdurch können das Herausführen der Strahlung der Lichtquelle, die nicht an Rauchpartikeln gestreut worden ist, aus dem Gehäuse heraus und damit der Ruhewert und die Detektionsempfindlichkeit weiter verbessert werden.

Die jeweilige konkave Seitenfläche hat einen größeren Krümmungsradius als die jeweilige konvexe Seitenfläche. In einer Ausführungsform sind die Führungselemente so ausgebildet, dass die konvexen Seitenflächen der jeweiligen Führungselemente jeweils als Teilflächen einer gedachten ersten Zylinderfläche aufgefasst werden können, wobei die bezogen auf das Gehäuse innersten Punkte der gedachten ersten Zylinderflächen auf einer zweiten gedachten Zylinderfläche liegen, die mittig in dem Gehäuse angeordnet ist. Der mittige Bereich, in den die Spitzen der Führungselemente weisen, kann durch die zweite gedachte Zylinderfläche definiert sein. Die Spitzen, das heißt die spitzen Kanten, werden in einer Ausführungsform durch eine dachartige Struktur mit ebenen Flächen gebildet. Bevorzugt treffen sich zwei Seitenflächen des jeweiligen Führungselements zum Bilden der jeweiligen Spitze unter einem spitzen Winkel in einem Bereich von 20° bis 25°. Dieser spitze Winkel ist insbesondere 22°. Auch dies führt zu einer weiteren Verbesserung des Herausführens der Strahlung der Lichtquelle, die nicht an Rauchpartikeln gestreut worden ist, aus dem Gehäuse heraus, so dass der Ruhewert und damit die Detektionsempfindlichkeit weiter verbessert werden können.

Jedes Führungselement kann auf einem Fuß angeordnet sein, der eine äußere Seitenfläche, die einen Teil der zylinderförmigen Außenfläche bildet, und zwei an diese äußere Seitenfläche angrenzende weitere Seitenflächen aufweist, die jeweils Füßen benachbarter Führungselemente zugewandt sind, wobei die Füße benachbarter Führungselemente an gegenüberliegenden Seiten einer Rauchöffnung so angeordnet sind, dass durch die Rauchöffnung in das Gehäuse eindringendes Licht durch Mehrfachreflexion aus dem Gehäuse herausführbar ist. Hierdurch kann der Anteil der Strahlung, die von außen in das Gehäuse eindringt, reduziert werden. Dies führt zu einem weiter verbesserten Ruhewert und damit zu einer weiter verbesserten Detektionsempfindlichkeit. Die Füße der Führungselemente sind bevorzugt rechtwinklig.

In einer Ausführungsform weisen die Führungselemente Drachenelemente mit drachenartigem Querschnitt auf. Die Drachenelemente umfassen bevorzugt jeweils zwei erste Seitenflächen, die der Mitte des Gehäuses zugewandt sind, und zwei zweite Seitenflächen, die der zylinderförmigen Außenfläche zugewandt sind, wobei die ersten Seitenflächen benachbarter Drachenelemente einander zugewandt sind und wobei die zweiten Seitenflächen benachbarter Drachenelemente einander zugewandt sind, wobei die ersten Seitenflächen konkav ausgebildet sind. Auch diese Führungselemente mit drachenartigem Querschnitt führen zu einer verbesserten Herausführung von Strahlung der Lichtquelle, die nicht an Rauchpartikeln gestreut worden ist, aus dem Gehäuse heraus und damit zu einer Reduzierung des Ruhewertes und einer Erhöhung der Detektionsempfindlichkeit.

Es ist bevorzugt, dass die Lichtführungsstruktur zwischen der zylinderförmigen Außenfläche und den Drachenelementen dachartige Elemente aufweist, die jeweils zwei Seitenflächen umfassen, die den zweiten Seitenflächen der Drachenelemente zugewandt sind, wobei eine erste Seitenfläche des jeweiligen Dachelements einer zweiten Seitenfläche eines Drachenelements und eine zweite Seitenfläche desselben Dachelements einer zweiten Seitenfläche eines anderen Drachenelements zugewandt ist, so dass zwischen diesen Seitenflächen ein Kanal gebildet wird, der von einer Rauchöffnung zu einer benachbarten Rauchöffnung führt, so dass von außen durch eine Rauchöffnung eindringendes Licht wieder herausführbar ist. Dies reduziert die von außen in das Gehäuse eindringende Strahlung und führt damit zu einer weiteren Reduzierung des Ruhewertes, wodurch wiederum die Detektionsempfindlichkeit weiter erhöht werden kann.

Es ist außerdem bevorzugt, dass die zylindrische Außenfläche einen Abschlussabschnitt des Gehäuses kreisförmig umschließt, wobei mittig auf der Innenseite des Abschlussabschnitts ein radialsymmetrisches Kegelelement angeordnet ist. Die Strahlung, die auf die Innenseite des Abschlussabschnitts fällt, wird somit auf die Seitenwand des Gehäuses reflektiert, in der sich die Rauchöffnungen befinden, durch die die Strahlung das Gehäuse verlassen kann. Dies führt zu einer weiteren Reduzierung des Ruhewertes und damit zu einer weiter erhöhten Detektionsempfindlichkeit. Bevorzugt ist das radialsymmetrische Kegelelement so ausgebildet, dass es nicht in den Bereich der nicht gestreuten, von der Lichtquelle ausgesandten Strahlung und nicht in einen Sichtbereich des Lichtdetektors ragt. Dies führt insbesondere dazu, dass das radialsymmetrische Kegelelement von der Lichtquelle ausgesandte Strahlung nicht in den Lichtdetektor reflektiert, wodurch eine weiter verbesserte Detektionsempfindlichkeit erreicht werden kann.

Es ist auch bevorzugt, dass die zylindrische Außenfläche einen Abschlussabschnitt des Gehäuses kreisförmig umschließt, wobei der Abschlussabschnitt einen nach innen radialsymmetrisch gewölbten Bereich umfasst. Es ist weiter bevorzugt, dass der nach innen radialsymmetrisch gewölbte Bereich einer Außenfläche eines Kugelabschnitts entspricht. Durch den nach innen gewölbten Bereich kann auch erreicht werden, dass Strahlung, die auf die Innenseite des Abschlussabschnitts trifft, in Richtung der Rauchöffnungen in der Seitenwand des Gehäuses reflektiert wird, wodurch der Ruhewert weiter reduziert und damit die Detektionsempfindlichkeit weiter erhöht werden kann.

Es ist weiterhin bevorzugt, dass das Gehäuse Rastelemente aufweist, um das Gehäuse mit der Detektionseinheit zu verbinden. Die Rastelemente ermöglichen ein leichtes Verbinden des Gehäuses mit einer Detektionseinheit. Insbesondere kann ein Gehäuse mittels der Rastelemente leicht durch ein anderes Gehäuse ersetzt werden.

Es ist zudem bevorzugt, dass das Gehäuse zumindest teilweise als Spritzgussteil ausgeführt ist. Dies kann zu einer vereinfachten und gleichzeitig sehr präzisen Fertigung des Gehäuses führen.

Zudem wird die oben genannte Aufgabe durch einen Rauchdetektor gelöst, wobei der Rauchdetektor umfasst:
- eine Detektionseinheit zum optischen Detektieren von Rauchpartikeln, wobei die Detektionseinheit eine Lichtquelle zum Aussenden einer an zu detektierenden Rauchpartikeln zu streuenden Strahlung und einen Lichtdetektor zum Detektieren der gestreuten Strahlung umfasst, wobei der Strahlenverlauf der von der Lichtquelle ausgesandten Strahlung und ein Sichtbereich des Lichtdetektors, innerhalb dessen der Lichtdetektor Streustrahlung detektieren kann, ein Schnittvolumen bilden, das sich außerhalb einer Ebene befindet, in der die Lichtquelle und der Lichtdetektor angeordnet sind, und
- ein Gehäuse nach einem der Ansprüche 1 bis 12, wobei die Detektionseinheit und das Gehäuse so ausgebildet sind, dass das Gehäuse das Schnittvolumen umschließt, wobei die Lichtführungsstruktur nicht in das Schnittvolumen ragt.

Weiterhin wird die oben genannte Aufgabe durch ein Rauchmeldesystem gelöst, das aufweist:
- einen Rauchdetektor nach Anspruch 13,
- eine Auswerteeinheit zum Bestimmen, ob Rauchpartikel vorhanden sind, durch Auswerten der detektierten Strahlung.

Des Weiteren wird die oben genannte Aufgabe durch eine Brandschutzanlage mit einem Rauchmeldesystem nach Anspruch 14 gelöst.

Es sollte verstanden werden, dass das Gehäuse nach Anspruch 1, der Rauchdetektor nach Anspruch 13, das Rauchmeldesystem nach Anspruch 14 und die Brandschutzanlage nach Anspruch 15 ähnliche oder identische Ausführungsformen aufweisen, wie sie insbesondere in den abhängigen Ansprüchen definiert sind.

Es werden Ausführungsformen der Erfindung unter Bezugnahme auf folgende Figuren beschrieben, wobei
- Fig. 1: schematisch und beispielhaft eine Ausführungsform eines Rauchdetektors zeigt,
- Fig. 2: schematisch und beispielhaft eine Ausführungsform einer Lichtquelle einer Detektionseinheit zeigt,
- Fig. 3: schematisch und beispielhaft einen Lichtdetektor der Detektionseinheit des Rauchdetektors zeigt,
- Fig. 4: schematisch und beispielhaft eine schräge Draufsicht auf eine Ausführungsform eines Gehäuses des Rauchdetektors zeigt,
- Fig. 5: erste und zweite gedachte Zylinderflächen des Gehäuses illustriert,
- Fig. 6: schematisch und beispielhaft eine weitere Ansicht des Gehäuses zeigt,
- Fig. 7: einen in Fig. 6 mit einem Kreis F gekennzeichneten Bereich in vergrößerter Darstellung zeigt,
- Fig. 8: einen Schnitt durch das in Fig. 6 gezeigte Gehäuse entlang der Linie B-B zeigt,
- Fig. 9: schematisch und beispielhaft ein Rastelement des Gehäuses zeigt,
- und Fig. 10: schematisch und beispielhaft ein Rauchmeldesystem mit dem Rauchdetektor und einer Auswerteeinheit zeigt.

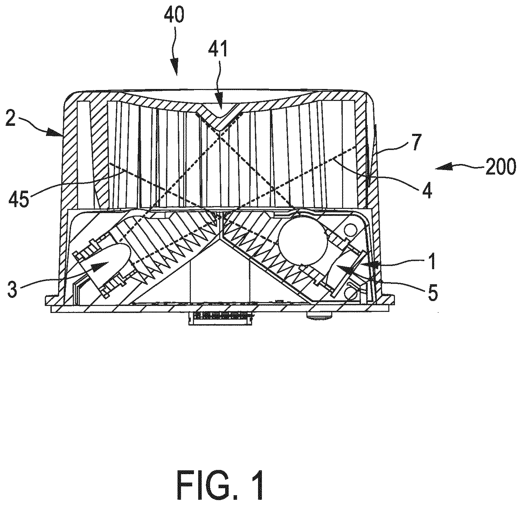

Fig. 1 zeigt schematisch und beispielhaft eine Ausführungsform eines Rauchdetektors. Der Rauchdetektor 200 umfasst eine Detektionseinheit 1 und ein Gehäuse 2, wobei die Detektionseinheit 1 angepasst ist, Rauchpartikel optisch zu detektieren. Sie umfasst eine Lichtquelle 3 zum Aussenden einer an zu detektierenden Rauchpartikeln zu streuenden Strahlung 4 und einen Lichtdetektor 5 zum Detektieren der gestreuten Strahlung 4, wobei der Strahlenverlauf der von der Lichtquelle 3 ausgesandten und nicht gestreuten Strahlung 4 und ein Sichtbereich 45 des Lichtdetektors 5 ein Schnittvolumen bilden, das sich außerhalb einer Ebene befindet, in der die Lichtquelle 3 und der Lichtdetektor 5 angeordnet sind. Die Detektionseinheit 1 und das Gehäuse 2 sind so ausgebildet, dass das Gehäuse 2 das Schnittvolumen umschließt.

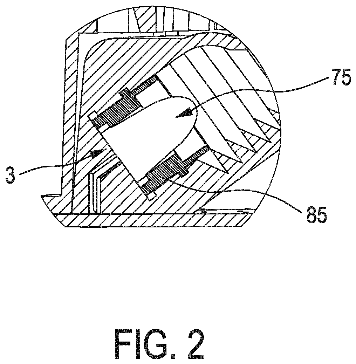

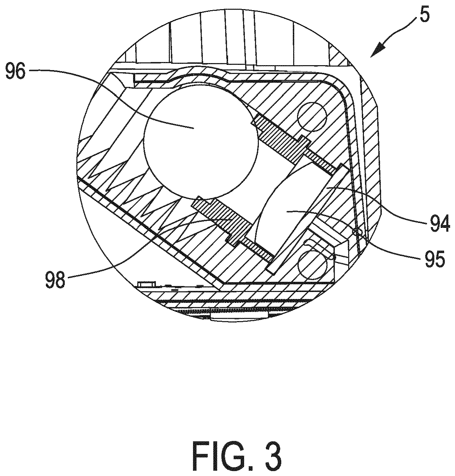

Fig. 2 zeigt beispielhaft und schematisch eine Ausführungsform der Lichtquelle 3, die in diesem Beispiel eine lichtemittierende Diode 75 umfasst, die in einer Halterung 85 angeordnet ist. Die Lichtquelle kann natürlich auch anders ausgebildet sein. Fig. 3 zeigt schematisch und beispielhaft eine Ausführungsform des Lichtdetektors 5. In diesem Bespiel umfasst der Lichtdetektor 5 ein Fokussierelement 96, wie ein Glaskugel, ein Empfangselement 95, wie eine Fotodiode, eine Halterung 98 für das Fokussierelement 96 und eine Halteplatte 94 für das Empfangselement 95. Auch der Lichtdetektor kann in einer anderen Ausführungsform natürlich anders ausgebildet sein.

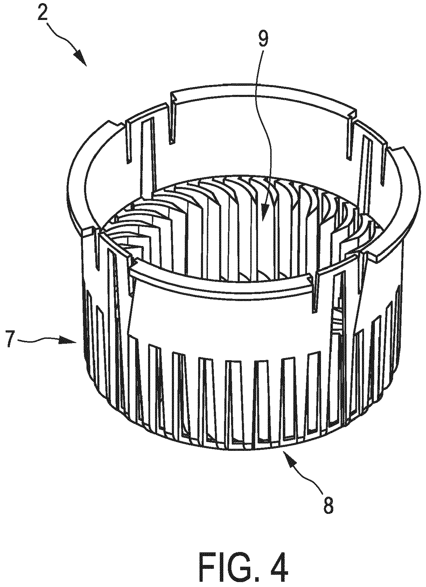

Das Gehäuse 2 umfasst eine Lichtführungsstruktur 9, die schematisch und beispielhaft in Fig. 4 gezeigt ist, wobei die Detektionseinheit 1 und das Gehäuse 2 so ausgebildet sind, dass die Lichtführungsstruktur 9 nicht in das Schnittvolumen ragt, das von dem Strahlenverlauf der von der Lichtquelle 3 ausgesandten und nicht gestreuten Strahlung 4 und dem Sichtbereich 45 des Lichtdetektors 5 gebildet wird.

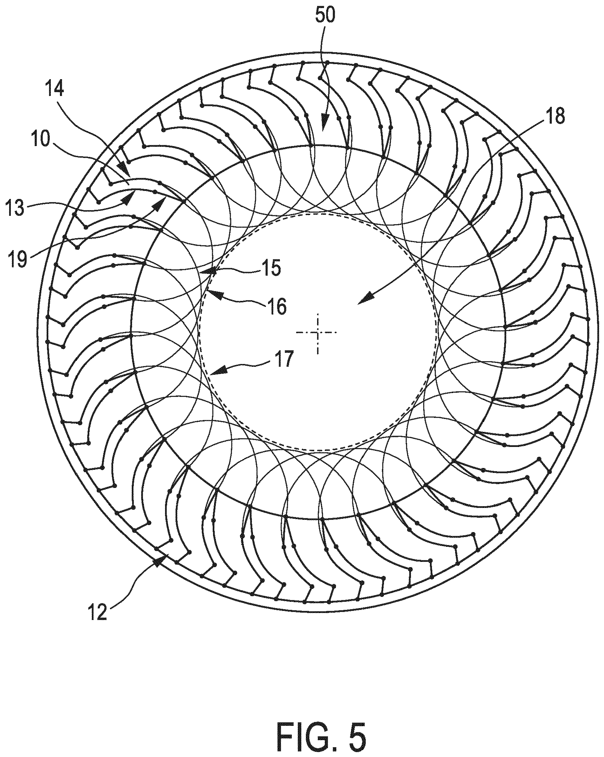

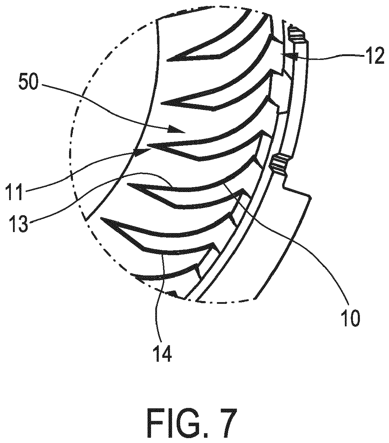

Das Gehäuse 2 umfasst zudem eine zylinderförmige Außenfläche 7 mit Rauchöffnungen 8, durch die die Rauchpartikel in das Gehäuse 2 gelangen. Die Lichtführungsstruktur 9 ist radialsymmetrisch und umfasst Führungselemente 10, die schematisch und beispielhaft in den Figuren 5 bis 7 gezeigt sind. Die Führungselemente 10 sind so ausgebildet, dass benachbarte Führungselemente 10 jeweils einen Führungskanal 50 bilden, durch den von der Lichtquelle 3 ausgesandte und nicht an den Rauchpartikeln gestreute Strahlung 4 in Richtung der Rauchöffnungen 8 durch Mehrfachreflexion herausführbar ist. Die Führungselemente 10 umfassen Spitzen 11, die in Richtung eines mittigen Bereichs 18 des Gehäuses 2 weisen, wobei jedes Führungselement 10 eine konkave Seitenfläche 13 und eine gegenüberliegende konvexe Seitenfläche 14 aufweist. Jedes Führungselement 10 ist auf einem Fuß 12 angeordnet, der eine äußere Seitenfläche, die einen Teil der zylinderförmigen Außenfläche 7 bildet, und zwei an diese äußere Seitenfläche angrenzende weitere Seitenflächen aufweist, die jeweils Füßen 12 benachbarter Führungselemente 10 zugewandt sind. Die Füße 12 benachbarter Führungselemente 10 sind an gegenüberliegenden Seiten einer Rauchöffnung 8 so angeordnet, dass durch die Rauchöffnung 8 in das Gehäuse eindringendes Licht durch Mehrfachreflexion aus dem Gehäuse herausführbar ist. Die konkave Seitenfläche 13 des jeweiligen Führungselements 10 hat einen größeren Krümmungsradius als die konvexe Seitenfläche 14 des jeweiligen Führungselements 10.

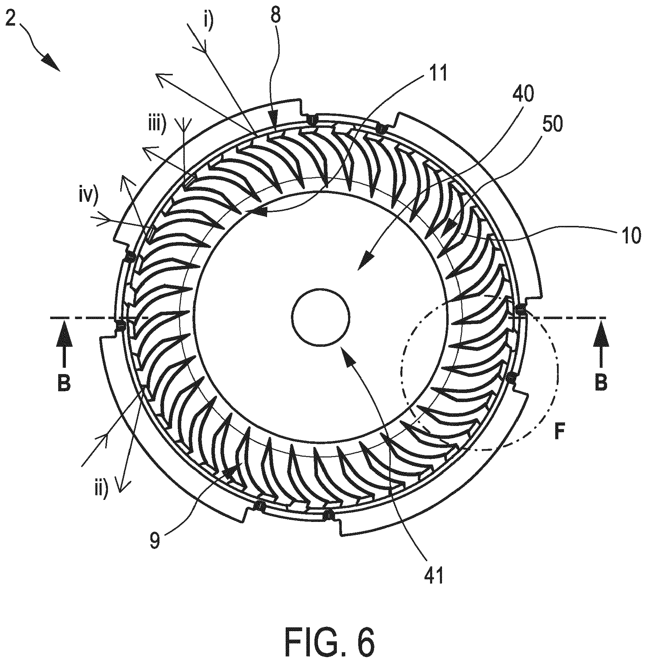

In einer bevorzugten Ausführungsform, die schematisch und beispielhaft in Fig. 5 illustriert ist, sind die Führungselemente 10 so ausgebildet, dass die konvexen Seitenflächen14 der jeweiligen Führungselemente 10 jeweils als Teilflächen einer gedachten ersten Zylinderfläche 15 aufgefasst werden können, wobei die bezogen auf das Gehäuse 2 innersten Punkte 16 der gedachten ersten Zylinderflächen 15 auf einer zweiten gedachten Zylinderfläche 17 liegen, die mittig in dem Gehäuse 2 angeordnet ist. In diesem Beispiel definiert die zweite gedachte Zylinderfläche 17 den mittigen Bereich 18, in den die Spitzen 11 der Führungselemente 10 weisen. Es wird darauf hingewiesen, dass Fig. 5 lediglich die gedachten ersten und zweiten Zylinderflächen 15, 17 illustrieren soll und nicht sämtliche Merkmale des Gehäuses darstellt. Beispielsweise sind in Fig. 5 die Rauchöffnungen 8 nicht dargestellt, obwohl das Gehäuse 2 diese natürlich aufweist. Zudem wird darauf verwiesen, dass, obwohl die Figuren 6 bis 9 Abmessungen aufweisen, diese hier nur beispielhaft genannt sind und das Gehäuse natürlich auch andere Abmessungen aufweisen kann.

Die Spitzen 11 der Führungselemente 10 können durch eine dachartige Struktur 19 mit ebenen Flächen gebildet sein. Die Spitzen 11 der Führungselemente 10 umschließen bevorzugt einen Winkel in einem Bereich von 20° bis 25° und umschließen insbesondere einen Winkel von 22°.

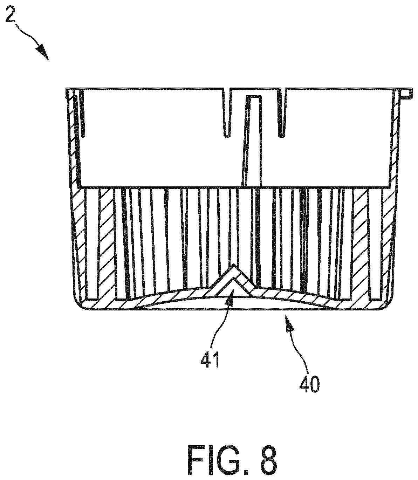

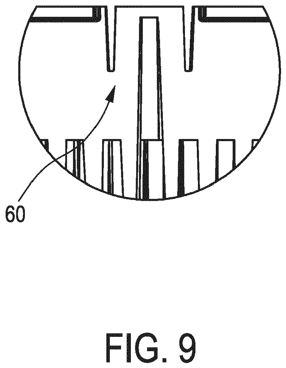

Wie insbesondere in den Figuren 1 und 8 illustriert ist, umschließt die zylindrische Außenfläche 7 kreisförmig einen Abschlussabschnitt 40, wobei mittig auf der Innenseite des Abschlussabschnitts 40 ein radialsymmetrisches Kegelelement 41 angeordnet ist. Das radialsymmetrisches Kegelelement 41 ist so ausgebildet, dass es nicht in den Bereich der nicht gestreuten, von der Lichtquelle 3 ausgesandten Strahlung 4 und nicht in den Sichtbereich 45 des Lichtdetektors 5 ragt. Der Abschlussabschnitt 40 umfasst zudem einen nach innen radialsymmetrisch gewölbten Bereich, der bevorzugt einer Außenfläche eines Kugelabschnitts entspricht. Das Gehäuse 2 umfasst auch Rastelemente 60, um das Gehäuse 2 mit der Detektionseinheit 2 zu verbinden, die korrespondierende Rastelemente aufweist. Die Rastelemente 60 sind schematisch und beispielhaft in Fig. 9 gezeigt.

Das Gehäuse 2 ist bevorzugt vollständig oder zumindest teilweise als Spritzgussteil ausgeführt.

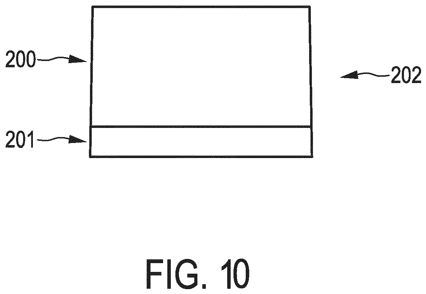

Fig. 10 zeigt beispielhaft und schematisch ein Rauchmeldesystem 202 mit dem Rauchdetektor 200 und einer Auswerteeinheit 201 zum Bestimmen, ob Rauchpartikel vorhanden sind, durch Auswerten der von dem Lichtdetektor 5 detektierten Strahlung. Die Auswerteeinheit 201 kann in den Rauchdetektor 200 integriert sein. Sie kann aber auch eine separate Einheit sein, die über eine drahtgebundene oder drahtlose Datenverbindung mit dem Rauchdetektor 200 verbunden ist. Das Rauchmeldesystem 202 kann Teil einer Brandschutzanlage sein. Das Rauchmeldesystem kann zudem auch ein Ansaugsystem umfassen, das Rauchpartikel ansaugt und dem Rauchdetektor zuführt.

Das Gehäuse kann auch als optischer Sumpf bzw. optischer Topf aufgefasst werden. Das Gehäuse ist bevorzugt, wie oben ausgeführt, als Spritzgusskomponente ausgeführt, sodass es technisch möglichst einfach hergestellt werden kann. Der optische Sumpf, das heißt das Gehäuse, bildet bevorzugt einen abgeschlossenen blickdichten Raum bei gleichzeitigem möglichst geringem Strömungswiderstand, für den das Gehäuse durchdringenden Rauch. Um eine hohe Detektionsempfindlichkeit gegenüber eintretenden Rauchpartikeln zu erreichen, ist das Gehäuse so ausgebildet, dass die Strahlungsleistung am Empfänger ohne das Vorhandensein von Rauch möglichst gering und bei eintretendem Rauch möglichst hoch ist. Wenn keine Rauchpartikel innerhalb des Gehäuses vorhanden sind, soll die von dem Lichtdetektor 5 detektierte Lichtintensität also möglichst gering sein und, wenn Rauchpartikel in das Gehäuse eintreten, sollte die an den Rauchpartikeln gestreute Strahlung zu möglichst hohen detektierten Intensitäten am Lichtdetektor 5 führen. Durch die Rastelemente ist zudem die Montage des Gehäuses, das auch als Rauchmeldereinsatz aufgefasst werden könnte, relativ leicht. Die radialsymmetrische Geometrie und das strömungsoptimierte Design können auch zu einer einfacheren Montage in ein Rauchansaugsystem führen, da bevorzugt keine vorgegebene Einbaurichtung vorliegt und gleiche Strömungsverhältnisse an unterschiedlichen Einbaupositionen vorhanden sind.

Die vom Sender, das heißt von der Lichtquelle 3, emittierte Strahlung wird gerichtet, bedingt durch die Geometrie des optischen Sumpfes, das heißt, insbesondere durch die Führungselemente, nach außen geführt, um so Mehrfachreflexionen innerhalb des Gehäuses und damit Strahlung, die auf den Lichtdetektor 5 trifft, zu vermeiden. Idealerweise wäre nur eine primäre Strahlungskeule vorhanden, wobei die Rauchpartikel, wenn sie in diese primäre Strahlungskeule treten, Strahlung streuen und die gestreute Strahlung von dem Lichtdetektor detektiert wird.

Durch die innere Form des optischen Sumpfes, das heißt des Gehäuses, wird eine nahezu blickdichte Messkammer gebildet, innerhalb der Rauchpartikel detektiert werden können. Hierzu weist das Gehäuse bevorzugt Geometrien auf, das heißt, insbesondere die Lichtführungsstrukturen, die einen direkten Blick in das Innere verhindern und Strahlung, die von außen eindringt, gerichtet wieder nach außen reflektieren.

Durch den radialsymmetrischen Aufbau des optischen Sumpfes kann dieser positionsunabhängig auf die Sende-/Empfangseinheit, das heißt auf die Detektionseinheit 1, montiert werden. Durch den radialsymmetrischen Aufbau kann auch ein richtungsunabhängiger Strömungswiderstand gewährleistet werden, so dass innerhalb beispielsweise eines Rauchansaugsystems eine beliebige Einbaurichtung verwendet werden kann. Zudem ist die Montage des optischen Sumpfes aufgrund der Rastelemente relativ einfach. Es ist beispielsweise nicht erforderlich, Metalllaschen anzulöten. Die Führungsstruktur innerhalb des Gehäuses ist zudem so ausgebildet, dass das Detektionsvolumen, innerhalb dessen Rauchpartikel detektiert werden können, nicht verkleinert wird.

Die oben beispielsweise unter Bezugnahme auf die Figuren 5 bis 7 beschriebenen Führungselemente 10 könnten auch als gebogene sichelförmige Lamellen aufgefasst werden, die radialsymmetrisch im optischen Sumpf, das heißt im Gehäuse, angeordnet sind. Die Spitze der jeweiligen Lamelle zeigt dabei in einen mittleren Bereich des optischen Sumpfes, insbesondere zum Mittelpunkt des optischen Sumpfes, so dass die vom Sender, das heißt von der Lichtquelle 3, gesehene senkrechte Fläche möglichst klein ist. Die beiden gekrümmten Flächen einer Lamelle können jeweils Zylinderoberflächen entsprechen, wobei die Radien dieser beiden Zylinderoberflächen so zueinander ausgelegt sein können, dass unter Berücksichtigung des Winkels benachbarter Lamellen zueinander, Strahlung, die unter passbeliebigem Winkel einfällt, durch Mehrfachreflexion aus dem optischen Sumpf herausgeführt wird. Jede Lamelle ist auf einem Fuß angeordnet, der so ausgebildet ist, dass eine kreisförmige Außenkontur des optischen Sumpfs gegeben ist. Der Fuß kann mehrere Reflexionsflächen aufweisen und so ausgebildet sein, dass a) Strahlung von außen erst gar nicht in den optischen Sumpf eintritt, wenn die Strahlung auf die die Außenkontur des optischen Sumpfes bildende Fläche des Fußes trifft (siehe beispielhaft Strahlenweg (i) in Fig. 6) und b) Strahlung, die auf eine Reflexionsfläche eines Fußes trifft, direkt aus den optischen Sumpf herausreflektiert wird (siehe beispielhaft Strahlenweg (ii) in Fig. 6), sowie c) Strahlung, die auf eine Reflexionsfläche eines Fußes trifft, die einer Reflexionsfläche eines benachbarten Fußes zugewandt ist, auf die Reflexionsfläche des benachbarten Fußes gelenkt wird, von der die Strahlung wieder aus dem optischen Sumpf herausgeführt wird (siehe beispielhaft Strahlenwege (iii) und (iv) in Fig. 6). Insbesondere wegen der Option b), die mit dem Strahlenweg ii) beispielhaft gezeigt ist, sind die Reflexionsflächen des jeweiligen Fußes, die den Reflexionsflächen der jeweiligen benachbarten Füße zugewandt sind, schräg gestellt. Diese Reflexionsflächen verlaufen bevorzugt nicht exakt in Richtung des Radius, sondern sind zu dem Radius verkippt.

Die an der inneren Oberseite des Gehäuses integrierte Kegel-/Kugelausschnittsgeometrie lenkt die Strahlungsanteile, die auf die Innenseite des Deckels fallen, auf die Seitenflächen des optischen Sumpfs, wo sie die Messkammer verlassen können. Die Geometrie des Kegels ist dabei bevorzugt so realisiert, dass die Überdeckung vom Sichtfenster des Empfängers, das heißt des Lichtdetektors, und der primären Strahlungskeule nicht eingeschränkt ist. Durch die kugelförmige Ausprägung der Innenseite des Abschlussabschnitts werden weitere Strahlungsanteile, die auf diese Innenseite treffen, auf die Seitenfläche umgelenkt. Auch diese Geometrie des Abschlussabschnitts ist radialsymmetrisch, so dass ein beliebiges Einbauen möglich ist.

Obwohl in obigen Ausführungsformen zum Teil konkrete Abmessungen gezeigt sind, kann die Führungsstruktur auch andere Abmessungen aufweisen und auch anders ausgebildet sein. So kann beispielsweise die Lamellen- und/oder Drachengeometrie auch gestreckt ausgeführt sein, wenn der Außendurchmesser des Gehäuses vergrößert wird. Die Oberseite des Gehäuses kann auch als Hohlkugel oder nur als Kegel oder Ähnliches ausgeführt sein, wenn die Höhe des Gehäuses nicht beschränkt ist, wobei auch in diesen Fällen das Detektionsvolumen, das durch das oben beschriebene Schnittvolumen definiert ist, nicht oder nur kaum eingeschränkt werden sollte.

Die Auswerteeinheit 201 kann angepasst sein, zu detektieren, dass Rauchpartikel vorhanden sind, wenn die detektierte Strahlungsintensität einen vorgegebenen Schwellwert überschreitet. Das Rauchmeldesystem umfasst bevorzugt eine Ausgabeeinheit, die in diesem Fall die Detektion von Rauchpartikeln an beispielsweise eine Alarmeinheit und/oder eine Brandlöscheinrichtung weiterleitet.

Obwohl in den oben beschriebenen Ausführungsformen der Abschlussabschnitt, der kreisförmig von der zylindrischen Außenfläche umschlossen wird, außen eine bestimmte Form aufweist, kann der Abschlussabschnitt außen auch anders geformt sein. So kann die Außenfläche des Abschlussabschnitts auch flach, das heißt eben, ausgebildet sein.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Die Bezugszeichen in den Ansprüchen sind nicht derart zu verstehen, dass der Gegenstand und der Schutzbereich der Ansprüche durch diese Bezugszeichen eingeschränkt ist.

### Bezugszeichenliste

- 1: Detektionseinheit
- 2: Gehäuse
- 3: Lichtquelle der Detektionseinheit
- 4: Strahlung der Lichtquelle
- 5: Lichtdetektor der Detektionseinheit
- 7: zylinderförmige Außenfläche
- 8: Rauchöffnungen
- 9: radialsymmetrische Lichtführungsstruktur
- 10: Führungselemente (Lamellen) der Lichtführungsstruktur
- 11: Spitzen der Führungselemente (Lamellen)
- 12: Fuß eines Führungselements (Lamelle)
- 13: konkave Seitenfläche eines Führungselements (Lamelle)
- 14: konvexe Seitenfläche eines Führungselements (Lamelle)
- 15: gedachte erste Zylinderfläche
- 16: innerster Punkt der ersten gedachten Zylinderfläche
- 17: gedachte zweite Zylinderfläche
- 18: mittiger Bereich
- 19: dachartige Struktur
- 40: Abschlussabschnitt des Gehäuses
- 41: radialsymmetrisches Kegelelement auf Innenseite des Abschlussabschnitts
- 45: Sichtbereich der Detektionseinheit
- 50: Führungskanal zwischen benachbarten Führungselementen (Lamellen)
- 60: Rastelemente zum Verbinden des Gehäuses mit der Detektionseinheit
- 75: Sendeelement (LED)
- 85: Halterung
- 94: Halteplatte des Empfangselements
- 95: Empfangselement (Photodiode)
- 96: Fokussierelement (Glaskugel)
- 98: Halterung
- 200: Rauchdetektor
- 201: Auswerteeinheit
- 202: Rauchmeldesystem

## Patentansprüche

1. Ein Gehäuse für eine Detektionseinheit (1) zum optischen Detektieren von Rauchpartikeln, wobei die Detektionseinheit (1) eine Lichtquelle (3) zum Aussenden einer an zu detektierenden Rauchpartikeln zu streuenden Strahlung (4) und einen Lichtdetektor (5) zum Detektieren der gestreuten Strahlung (4) umfasst, wobei das Gehäuse (2) eine zylinderförmige Außenfläche (7) mit Rauchöffnungen (8), durch die die Rauchpartikel in das Gehäuse (2) gelangen, und eine radialsymmetrische Lichtführungsstruktur (9) mit Führungselementen (10) umfasst, wobei die Führungselemente (10) so ausgebildet sind, dass benachbarte Führungselemente (10) jeweils einen Führungskanal (50) bilden, durch den von der Lichtquelle (3) ausgesandte und nicht an den Rauchpartikeln gestreute Strahlung (4) in Richtung der Rauchöffnungen (8) durch Mehrfachreflexion herausführbar ist, wobei jedes Führungselement (10) eine konkave Seitenfläche (13) und eine gegenüberliegende konvexe Seitenfläche (14) aufweist und wobei die konkave Seitenfläche (13) einen größeren Krümmungsradius hat als die konvexe Seitenfläche (14).

2. Das Gehäuse nach Anspruch 1, **dadurch gekennzeichnet, dass** die Führungselemente (10) Spitzen (11) aufweisen, die in Richtung eines mittigen Bereichs (18) des Gehäuses (2) weisen.

3. Das Gehäuse nach einem der Ansprüche 1 und 2, **dadurch gekennzeichnet, dass** jedes Führungselement (10) auf einem Fuß (12) angeordnet ist, der eine äußere Seitenfläche, die einen Teil der zylinderförmigen Außenfläche (7) bildet, und zwei an diese äußere Seitenfläche angrenzende weitere Seitenflächen aufweist, die jeweils Füßen (12) benachbarter Führungselemente (10) zugewandt sind, wobei die Füße (12) benachbarter Führungselemente (10) an gegenüberliegenden Seiten einer Rauchöffnung (8) so angeordnet sind, dass durch die Rauchöffnung (8) in das Gehäuse eindringendes Licht durch Mehrfachreflexion aus dem Gehäuse (2) herausführbar ist.

4. Das Gehäuse nach einem der Ansprüche 1 bis 3, **dadurch gekennzeichnet, dass** die Führungselemente (10) so ausgebildet sind, dass die konvexen Seitenflächen (14) der jeweiligen Führungselemente (10) jeweils als Teilflächen einer gedachten ersten Zylinderfläche (15) aufgefasst werden können, wobei die bezogen auf das Gehäuse innersten Punkte (16) der gedachten ersten Zylinderflächen (15) auf einer zweiten gedachten Zylinderfläche (17) liegen, die mittig in dem Gehäuse angeordnet ist.

5. Das Gehäuse nach Anspruch 4, soweit rückbezogen auf Anspruch 2, **dadurch gekennzeichnet, dass** der mittige Bereich (18) durch die zweite gedachte Zylinderfläche (17) definiert ist.

6. Das Gehäuse nach Anspruch 2 oder einem der Ansprüche 3 bis 5, soweit rückbezogen auf Anspruch 2, **dadurch gekennzeichnet, dass** die Spitzen (11) durch eine dachartige Struktur (19) mit ebenen Flächen gebildet werden.

7. Das Gehäuse nach Anspruch 2 oder einem der Ansprüche 3 bis 6, soweit rückbezogen auf Anspruch 2, **dadurch gekennzeichnet, dass** die Spitzen (11) der Führungselemente (10) einen Winkel in einem Bereich von 20° bis 25°, insbesondere einen Winkel von 22°, einschließen.

8. Das Gehäuse nach einem der vorhergehenden Ansprüche, **dadurch gekennzeichnet, dass** die zylindrische Außenfläche (7) einen Abschlussabschnitt (40) des Gehäuses (2) kreisförmig umschließt, wobei mittig auf der Innenseite des Abschlussabschnitts (40) ein radialsymmetrisches Kegelelement (41) angeordnet ist.

9. Das Gehäuse nach Anspruch 8, **dadurch gekennzeichnet, dass** das radialsymmetrische Kegelelement (41) so ausgebildet ist, dass es nicht in den Bereich der nicht gestreuten, von der Lichtquelle (3) ausgesandten Strahlung (4) und nicht in einen Sichtbereich (45) des Lichtdetektors (5) ragt.

10. Das Gehäuse nach einem der vorhergehenden Ansprüche, **dadurch gekennzeichnet, dass** die zylindrische Außenfläche (7) einen Abschlussabschnitt (40) des Gehäuses (2) kreisförmig umschließt, wobei der Abschlussabschnitt (40) einen nach innen radialsymmetrisch gewölbten Bereich umfasst.

11. Das Gehäuse nach Anspruch 10, **dadurch gekennzeichnet, dass** der nach innen radialsymmetrisch gewölbte Bereich einer Außenfläche eines Kugelabschnitts entspricht.

12. Das Gehäuse nach einem der vorhergehenden Ansprüche, **dadurch gekennzeichnet, dass** das Gehäuse (2) zumindest teilweise als Spritzgussteil ausgeführt ist.

13. Ein Rauchdetektor (200) mit:
- einer Detektionseinheit (1) zum optischen Detektieren von Rauchpartikeln, wobei die Detektionseinheit (1) eine Lichtquelle (3) zum Aussenden einer an zu detektierenden Rauchpartikeln zu streuenden Strahlung (4) und einen Lichtdetektor (5) zum Detektieren der gestreuten Strahlung (4) umfasst, wobei der Strahlenverlauf der von der Lichtquelle (3) ausgesandten Strahlung (4) und ein Sichtbereich (45) des Lichtdetektors (5), innerhalb dessen der Lichtdetektor (5) Streustrahlung detektieren kann, ein Schnittvolumen bilden, das sich außerhalb einer Ebene befindet, in der die Lichtquelle (3) und der Lichtdetektor (5) angeordnet sind, und
- einem Gehäuse (2) nach einem der Ansprüche 1 bis 12, wobei die Detektionseinheit (1) und das Gehäuse (2) so ausgebildet sind, dass das Gehäuse (2) das Schnittvolumen umschließt, wobei die Lichtführungsstruktur (9) nicht in das Schnittvolumen ragt.

14. Ein Rauchmeldesystem (202) mit:
- einem Rauchdetektor (200) nach Anspruch 13,
- einer Auswerteeinheit (201) zum Bestimmen, ob Rauchpartikel vorhanden sind, durch Auswerten der detektierten Strahlung (4).

15. Eine Brandschutzanlage mit einem Rauchmeldesystem nach Anspruch 14.

## Claims

1. A housing for a detection unit (1) for optically detecting smoke particles, said detection unit (1) comprising a light source (3) for emitting radiation (4) to be scattered by smoke particles to be detected and a light detector (5) for detecting the scattered radiation (4), wherein the housing (2) comprises a cylindrical outer surface (7) having smoke openings (8) through which the smoke particles enter the housing (2) and a radially symmetric light-guiding structure (9) having guide members (10), wherein the guide members (10) are so designed that adjacent guide members (10) each form a guide channel (50) through which the radiation (4) emitted from the light source (3) and not scattered by the smoke particles is guidable to the outside in the direction of the smoke openings (8) by multiple reflection, wherein each guide member (10) has a concave side surface (13) and an opposite convex side surface (14) and wherein the concave side surface (13) has a larger radius of curvature than the convex side surface (14).

2. The housing according to claim 1, **characterised in that** the guide members (10) have tips (11) that point towards a central region (18) of the housing (2).

3. The housing according to any one of claims 1 and 2, **characterised in that** each guide member (10) is arranged on a base (12) having an outer side surface which forms part of the cylindrical outer surface (7) and two further side surfaces adjacent to said outer side surface, each of which faces bases (12) of adjacent guide members (10), wherein the bases (12) of adjacent guide members are arranged on opposite sides of a smoke opening (8) in such a way that light entering the housing through the smoke opening (8) is guidable out of the housing (2) by multiple reflection.

4. The housing according to any one of claims 1 to 3, **characterised in that** the guide members (10) are so designed that the convex side surfaces (14) of the respective guide members (10) can each be regarded as subareas of an imaginary first cylinder surface (15), wherein the innermost points (16) of the imaginary first cylinder surfaces (15), in relation to the housing, lie on a second imaginary cylinder surface (17) which is centrally arranged inside the housing.

5. The housing according to claim 4, insofar as it is dependent on claim 2, **characterised in that** the central region (18) is defined by the second imaginary cylinder surface (17).

6. The housing according to claim 2 or any one of claims 3 to 5, insofar as they are dependent on claim 2, **characterised in that** the tips (11) are formed by a roof-like structure (19) having planar surfaces.

7. The housing according to claim 2 or any one of claims 3 to 6, insofar as they are dependent on claim 2, **characterised in that** the tips (11) of the guide members (10) enclose an angle in a range from 20° to 25°, in particular an angle of 22°.

8. The housing according to any one of the preceding claims, **characterised in that** the cylindrical outer surface (7) circularly encloses a closure section (40) of the housing (2), wherein a radially symmetric cone member (41) is centrally arranged on the inner side of the closure section (40).

9. The housing according to claim 8, **characterised in that** the radially symmetric cone member (41) is so designed that it does not protrude into the region of the unscattered radiation (4) emitted from the light source (3) or into a field of vision (45) of the light detector (5).

10. The housing according to any one of the preceding claims, **characterised in that** the cylindrical outer surface (7) circularly encloses a closure section (40) of the housing (2), wherein the closure section (40) comprises an inwardly, radially symmetrically curved region.

11. The housing according to claim 10, **characterised in that** the inwardly, radially symmetrically curved region matches an outer surface of a spherical segment.

12. The housing according to any one of the preceding claims, **characterised in that** the housing (2) is designed at least partly as an injection-moulded part.

13. A smoke detector (200) comprising:
- a detection unit (1) for optically detecting smoke particles, said detection unit (1) comprising a light source (3) for emitting radiation (4) to be scattered by smoke particles to be detected and a light detector (5) for detecting the scattered radiation (4), wherein the beam path of the radiation (4) emitted from the light source (3) and a field of vision (45) of the light detector (5), within which the light detector (5) can detect scattered radiation, form an intersection volume located outside a plane in which the light source (3) and the light detector (5) are arranged, and
- a housing (2) according to any one of claims 1 to 12, wherein the detection unit (1) and the housing (2) are so designed that the housing (2) encloses the intersection volume, wherein the light-guiding structure (9) does not protrude into the intersection volume.

14. A smoke detection system (202) comprising:
- a smoke detector (200) according to claim 13,
- an analyser unit (201) for determining whether smoke particles are present, by analysing the detected radiation (4).

15. A fire protection system comprising a smoke detection system according to claim 14.

## Revendications

1. Boîtier pour une unité de détection (1) pour la détection optique de particules de fumées, dans lequel l'unité de détection (1) comporte une source de lumière (3) pour l'émission d'un rayonnement (4) à disperser au niveau de particules de fumées à détecter et un détecteur de lumière (5) pour la détection du rayonnement (4) dispersé, dans lequel le boîtier (2) comporte une surface extérieure (7) cylindrique avec des ouvertures de fumées (8), par lesquelles les particules de fumées parviennent dans le boîtier (2), et une structure de guidage de lumière (9) symétrique radialement avec des éléments de guidage (10), dans lequel les éléments de guidage (10) sont réalisés de sorte que des éléments de guidage (10) contigus forment respectivement un canal de guidage (50), par lequel un rayonnement émis par la source de lumière (3) et non dispersé au niveau des particules de fumées (4) peut être guidé en direction des ouvertures de fumées (8) par réflexion multiple, dans lequel chaque élément de guidage (10) présente une surface latérale concave (13) et une surface latérale convexe (14) opposée et dans lequel la surface latérale concave (13) présente un rayon de courbure supérieur à celui de la surface latérale convexe (14).

2. Boîtier selon la revendication 1, **caractérisé en ce que** les éléments de guidage (10) présentent des pointes (11) qui sont dirigées en direction d'une zone (18) médiane du boîtier (2).

3. Boîtier selon l'une des revendications 1 et 2, **caractérisé en ce que** chaque élément de guidage (10) est agencé sur un pied (12) qui présente une surface latérale extérieure qui forme une partie de la surface extérieure (7) cylindrique, et deux autres surfaces latérales contigües à cette surface latérale extérieure qui sont tournées respectivement vers des pieds (12) d'éléments de guidage (10) contigus, dans lequel les pieds (12) d'éléments de guidage (10) contigus sont agencés au niveau de côtés opposés d'une ouverture de fumées (8) de sorte que de la lumière pénétrant par l'ouverture de fumées (8) dans le boîtier puisse être guidée par réflexion multiple hors du boîtier (2).

4. Boîtier selon l'une des revendications 1 à 3, **caractérisé en ce que** les éléments de guidage (10) sont réalisés de sorte que les surfaces latérales convexes (14) des éléments de guidage (10) respectifs puissent être détectées respectivement comme des surfaces partielles d'une première surface cylindrique (15) imaginaire, dans lequel les points les plus intérieurs par rapport au boîtier (16) des premières surfaces cylindriques (15) imaginaires se trouvent sur une deuxième surface cylindrique (17) imaginaire qui est agencée au milieu dans le boîtier.

5. Boîtier selon la revendication 4, dans la mesure où elle se réfère à la revendication 2, **caractérisé en ce que** la zone médiane (18) est définie par la deuxième surface cylindrique (17) imaginaire.

6. Boîtier selon la revendication 2 ou l'une des revendications 3 à 5, dans la mesure où elle se réfère à la revendication 2, **caractérisé en ce que** les pointes (11) sont formées par une structure (19) à toit avec des surfaces planes.

7. Boîtier selon la revendication 2 ou l'une des revendications 3 à 6, dans la mesure où elle se réfère à la revendication 2, **caractérisé en ce que** les pointes (11) des éléments de guidage (10) forment un angle dans une plage de 20° à 25°, en particulier un angle de 22°.

8. Boîtier selon l'une des revendications précédentes, **caractérisé en ce que** la surface extérieure (7) cylindrique entoure de manière circulaire une section terminale (40) du boîtier (2), dans lequel un élément conique (41) symétrique radialement est agencé au milieu sur le côté intérieur de la section terminale (40).

9. Boîtier selon la revendication 8, **caractérisé en ce que** l'élément conique (41) symétrique radialement est réalisé de sorte qu'il ne dépasse pas dans la zone du rayonnement (4) non dispersé émis par la source (3) et dans une zone visible (45) du détecteur de lumière (5).

10. Boîtier selon l'une des revendications précédentes, **caractérisé en ce que** la surface extérieure (7) cylindrique entoure de manière circulaire une section terminale (40) du boîtier (2), dans lequel la section terminale (40) comporte une zone incurvée de manière symétrique radialement vers l'intérieur.

11. Boîtier selon la revendication 10, **caractérisé en ce que** la zone incurvée de manière symétrique radialement vers l'intérieur correspond à une surface extérieure d'une section sphérique.

12. Boîtier selon l'une des revendications précédentes, **caractérisé en ce que** le boîtier (2) est réalisé au moins partiellement comme une pièce moulée par injection.

13. Détecteur de fumées (200) avec :
- une unité de détection (1) pour la détection optique de particules de fumées, dans lequel l'unité de détection (1) comporte une source de lumière (3) pour l'émission d'un rayonnement (4) à disperser au niveau de particules de fumées à détecter et un détecteur de lumière (5) pour la détection du rayonnement (4) dispersé, dans lequel le tracé du faisceau du rayonnement (4) émis par la source de lumière (3) et une zone visible (45) du détecteur de lumière (5), à l'intérieur de laquelle le détecteur de lumière (5) peut détecter un rayonnement dispersé, forment un volume de coupe qui se trouve en dehors d'un plan dans lequel la source de lumière (3) et le détecteur de lumière (5) sont agencés, et
- un boîtier (2) selon l'une des revendications 1 à 12, dans lequel l'unité de détection (1) et le boîtier (2) sont réalisés de sorte que le boîtier (2) entoure le volume de coupe, dans lequel la structure de guidage de lumière (9) ne dépasse pas dans le volume de coupe.

14. Système détecteur de fumées (202) avec :
- un détecteur de fumées (200) selon la revendication 13,
- une unité d'évaluation (201) pour déterminer si des particules de fumées sont présentes, par évaluation du rayonnement (4) détecté.

15. Installation coupe-feu avec un système détecteur de fumées selon la revendication 14.
